# EUROPÄISCHE PATENTSCHRIFT

(11) **EP 1 809 505 B1**
(45) Veröffentlichungstag und Bekanntmachung des Hinweises auf die Patenterteilung: **07.05.2008**
(21) Anmeldenummer: 05791102.6
(22) Anmeldetag: 27.09.2005
(51) Int. Cl.: B60K 1/02, B60K 6/387, B60K 6/405, B60K 6/48

(54) **ANTRIEBSEINHEIT FÜR KRAFTFAHRZEUG MIT HYBRIDANTRIEB IN LÄNGSANORDNUNG**
DRIVE UNIT FOR MOTOR VEHICLES WITH HYBRID DRIVE IN A LONGITUDINAL ARRANGEMENT
UNITE D'ENTRAINEMENT POUR UN VEHICULE AUTOMOBILE A PROPULSION HYDRIDE EN AGENCEMENT LONGITUDINAL

(30) Priorität: 27.09.2004 AT 6982004 U
(43) Veröffentlichungstag der Anmeldung: 25.07.2007
(73) Patentinhaber: Magna Steyr Fahrzeugtechnik AG & Co KG, 8041 Graz (AT)
(72) Erfinder: ZÖHRER, Franz, A-9376 Knappenberg (AT); ERJAWETZ, Konstantin, A-8010 Graz (AT); PICHLER, Peter, A-8051 Graz (AT)
(74) Vertreter: Harringer, Thomas
(86) Internationale Anmeldenummer: PCT/AT2005/000388
(87) Internationale Veröffentlichungsnummer: WO 2006/034520

(56) Entgegenhaltungen:
- DE-A1- 2 943 554
- DE-A1- 19 919 455
- US-A- 1 853 058
- US-A1- 2004 147 353

## Beschreibung

Die Erfindung betrifft eine Antriebseinheit für ein Kraftfahrzeug mit Hybridantrieb und einem Antriebsstrang in Längsanordnung, welcher Antriebsstrang auch eine Verbrennungskraftmaschine, eine Längswelle zum Antrieb einer ersten Achse, und ein Getriebe umfasst, und welche Antriebseinheit zwischen der Verbrennungskraftmaschine und der ersten Achse angeordnet ist und aus einem Gehäuseteil, einer Durchtriebswelle, einer die Durchtriebswelle umgebenden elektrischen Maschine und einer ersten Kupplung vor und und einer zweiten Kupplung nach der elektrischen Maschine besteht. Bei Längsanordnung ist die permanent angetriebene, hier erste, Achse in aller Regel die Hinterachse.

Ein derartiger Antriebsstrang ist aus der DE 29 43 554 C2 bekannt, allerdings nur schematisch dargestellt. Die Drehzahlverhältnisse und baulichen Merkmale sind nicht erkennbar. Jedenfalls dient die elektrische Maschine sowohl als Antrieb beziehungsweise als Zusatzantrieb, als auch als Starter und Generator. Etwas mehr, wenn auch für einen Antriebsstrang in Quer-Bauart, ist der EP 775 607 B1 zu entnehmen. Dort ist die elektrische Maschine relativ hochtourig und über ein Planetengetriebe mit dem Achsantrieb verbunden, ebenso wie die Verbrennungskraftmaschine. Das Planetengetriebe ist ein Überlagerungsgetriebe, in dem die beiden Antriebsmomente addiert werden. Das hat den Nachteil, dass, wenn nur einer der beiden Antriebe arbeitet, der andere blockiert sein muss, um ein Stützmoment zu bieten. Weiters ist dort ein rein elektromotorischer Antrieb der zweiten Achse hinzugefügt. Um einen derartigen Zusatzantrieb an einer Hinterachse unterzubringen, ist dort ohne konstruktive Änderungen zu wenig Platz. Wenn bei einem Antriebsstrang in Längsbauart die zweite angetriebene Achse die Vorderachse sein soll, ist das Raumproblem unlösbar und ist auch eine tiefgreifende Änderung des ganzen Fahrzeuges erforderlich.

Es ist somit Aufgabe der Erfindung, bei einem Fahrzeug mit Antriebsstrang in Längsanordnung einen zusätzlichen elektrischen Antrieb der zweiten (in der Regel vorderen) Achse zu schaffen, bei möglichst geringen Kosten und Änderungen am Fahrzeug. Die Antriebseinheit soll auch modular (das heisst in verschiedenen Konstellationen) einsetzbar sein und mit dem Raum das Auslangen finden, der bei üblichen Allradfahrzeugen für ein Verteilergetriebe zur Verfügung steht. Sie soll also auch nicht länger sein.

Erfindungsgemäß wird das dadurch erzielt, dass eine erste elektrische Maschine mit der ersten Kupplung baulich vereint ist uns dass für den Antrieb einer zweiten Achse die Antriebseinheit eine zweite die Durchtriebswelle umgebende elektrische Maschine umfasst, und über eine dritte Kupplung und einen Versatztrieb mit einer zur zweiten angetriebenen Achse führenden Welle antriebsverbunden ist. So ist die Einbaulänge nur durch die beiden unmittelbar benachbarten elektrischen Maschinen bestimmt, vor allem, wenn auch die zweite elektrische Maschine mit der dritten Kupplung baulich vereint ist (Anspruch 2), sodass gemeinsam mit dem Versatztrieb die Kontur eines Verteilergetriebes gewahrt ist. Es sind weiter keine Änderungen am Fahrzeug erforderlich, weil der an die Antriebseinheit anschließende Antriebsstrang konventionell ist.

Es ist vorteilhaft, wenn die Kupplung innerhalb der elektrischen Maschine angeordnet ist (Anspruch 3), weil so die elektrischen Maschinen auf eine zur Motordrehzahl passende Drehzahl ausgelegt und wegen des größeren Radius des Rotors sehr schmal ausgeführt werden können.

In Weiterbildung der Erfindung sind die erste und die zweite elektrische Maschine je von einem aus einem zylindrischen Mantel und einer achsnormalen Wand bestehenden Gehäuse aufgenommen und sind die zylindrischen Mäntel miteinander verschraubt (Anspruch 4). So werden die Voraussetzungen für einen modularen Einsatz geschaffen, der Zusammenbau der beiden koaxialen Moduln erleichtert und die Einbaulänge weiter verkürzt.

Wenn sich die elektrische Maschine aus einem im Gehäuse befestigten Stator und einem Rotor zusammensetzt und wenn die Kupplung jeweils eine aus einem Innenteil und einem Aussenteil bestehende Lamellenkupplung ist, ist in Weiterverfolgung des Erfindungsgedankens sowohl der erste als auch der zweite Rotor in einem Lager an der achsnormalen Wand des Gehäuses gelagert und hat eine austauschbare Kuppelscheibe, die mit dem Kupplungsaussenteil drehfest verbunden ist, wobei die Kupplung zwischen dem Lager und der Kuppelscheibe angeordnet ist (Anspruch 5). Die austauschbare Kuppelscheibe macht es möglich, identische Rotoren für beide elektrischen Maschinen einzusetzen, sie werden durch Anbringung der jeweils geeigneten Kuppelscheibe ihrer Einbausituation angepasst.

In einer besonders vorteilhaften Ausführungsform sitzt der Innenteil der ersten Kupplung auf einer ersten Welle, die mit der Verbrennungskraftmaschine antriebsverbunden ist und ist der Aussenteil der ersten Kupplung mit einer zweiten Welle (die die Durchtriebswelle darstellt) drehfest verbunden, welche Welle die zweite elektrische Maschine durchsetzt und zur zweiten Kupplung führt (Anspruch 6); und ist der Innenteil der zweiten Kupplung über eine Hohlwelle mit einem Primärrad des Versatztriebes drehfest verbunden und ist der Aussenteil der zweiten Kupplung mit der Kuppelscheibe der zweiten elektrischen Maschine drehfest verbunden (Anspruch 7). Damit ist die Antriebseinheit voll modularisiert, die Einheit mit der ersten elektrischen Maschine ist der erste und die mit der zweiten elektrischen Maschine ist der zweite Modul. So kann etwa der erste Modul alleine eingesetzt werden, wenn ein Hybrid-Fahrzeug mit nur einer angetriebenen Achse auszurüsten ist.

Vorteilhafte Weiterbildungen bestehen darin, dass ein einen Ringkolben enthaltender Aktuatorzylinder für die Kupplung an der achsnormalen Wand befestigt ist, und der Ringkolben über ein Drucklager mit einer Andruckplatte der Kupplung (Anspruch 8) und dass die erste und/oder die zweite elektrische Maschine je einen an der achsnormalen Wand befestigten Drehzahlsensor haben und am Rotor ein Drehzahlgeber-Kranz angebracht ist (Anspruch 9). Ersteres erlaubt die Betätigung der Kupplungen ohne eine Dreheintragung in einen rotierenden Teil; zweiteres ermöglicht es einer Steuerung, das Einrücken einer Kupplung von den Drehzahlverhältnissen abhängig zu gestalten.

Im Folgenden wird die Erfindung anhand von Abbildungen beschrieben und erläutert. Es stellen dar:
- Fig. 1: Ein Schema eines Antriebsstranges mit der erfindungsgemäßen Antriebseinheit,
- Fig. 2: Die erfindungsgemäße Antriebseinheit im Längsschnitt,
- Fig. 3: Einen Ausschnitt aus Fig. 2.

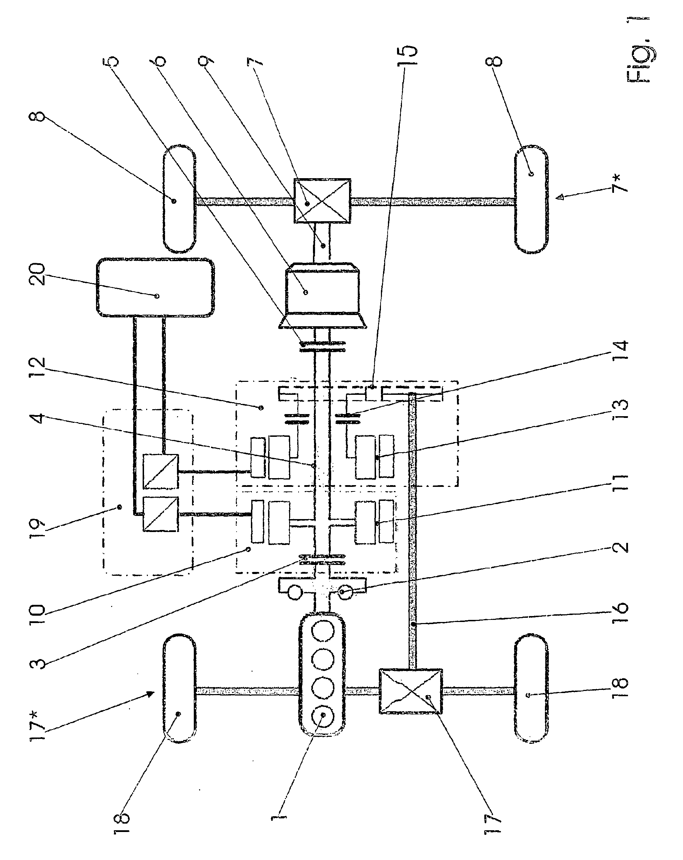

In Fig. 1 ist die Verbrennungskraftmaschine eines Kraftfahrzeuges mit 1 bezeichnet. Sie steht über einen Schwingungstilger 2, gegebenenfalls an einem Schwungrad, und eine erste Kupplung 3 mit einer Durchtriebswelle 4 in Verbindung. Diese treibt über eine zweite Kupplung 5 und ein Schaltgetriebe 6 eine erste getriebene Achse 7*, hier deren Achsgetriebe 7 und damit im gezeigten Ausführungsbeispiel die Hinterräder 8.

Die erfindungsgemäße Antriebseinheit setzt sich aus einem ersten Modul 10 und einem unmittelbar daran anschließenden zweiten Modul 12 zusammen. Im ersten Modul 10 befindet sich eine erste elektrische Maschine 11, im zweiten Modul 12 eine zweite elektrische Maschine 13. Letztere treibt über eine dritte Kupplung 14 und einen Versatztrieb 15 eine Gelenkwelle 16, die zur zweiten angetriebenen Achse 17* führt, und damit über ein Achsgetriebe 17 zu den Vorderrädern 18. Für die Steuerung der beiden elektrischen Maschinen 11,13 ist eine Leistungselektronik 19 vorhanden, die an einen Energiespeicher 20, etwa einen Akkumulator, angeschlossen ist.

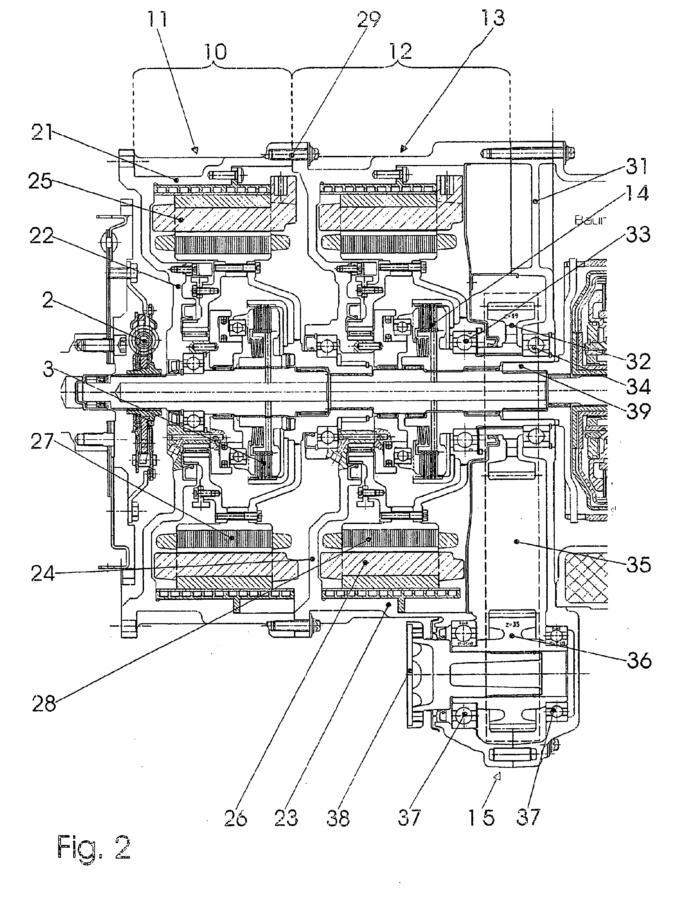

In Fig. 2 ist die Antriebseinheit aus den beiden Moduln 10,12 zusammengesetzt. Das Gehäuse des ersten besteht aus einem zylindrischen Mantel 21 und einer achsnormalen Wand 22, das des zweiten Moduls 12 aus einem zylindrischen Mantel 23 und einer achsnormalen Wand 24. Im Mantel 21 ist eine erste Statorwicklung 25 der ersten elektrischen Maschine 11 befestigt, im Mantel 23 eine zweite Statorwicklung 26 der zweiten elektrischen Maschine 13. Deren Rotoren sind mit 27 und 28 bezeichnet. Die beiden Mäntel 21,23 der beiden Moduln 10, 12 sind mittels einer Anzahl Bolzen 29 miteinander zu einem gemeinsamen Gehäuse verschraubt.

An den Mantel 23 des zweiten Moduls 12 schließt ein Gehäusedeckel 31 an, der den Versatztrieb 15 enthält. Dieser besteht aus einem vom zweiten Rotor 28 über die dritte Kupplung 14 antreibbaren Primärzahnrad 32, und einem hier über eine Zahnkette 35 angetriebenen Sekundärzahnrad 36. Anstelle der Zahnkette könnten auch andere Zugmittel oder Zwischenzahnräder vorgesehen sein. Beiderseits des Prirnärzahnrades 32 sind Lager 33,34 vorgesehen. Das Sekundärzahnrad 37 ist in Lagern 37 geführt und mit einem Flansch 38, an den die Gelenkwelle 16 angeschlossen wird, drehfest verbunden. Koaxial mit dem Primärzahnrad 32 ist noch ein Abtriebsflansch 39 vorgesehen, an den die zweite Kupplung 5 (Fig. 1) anschließt.

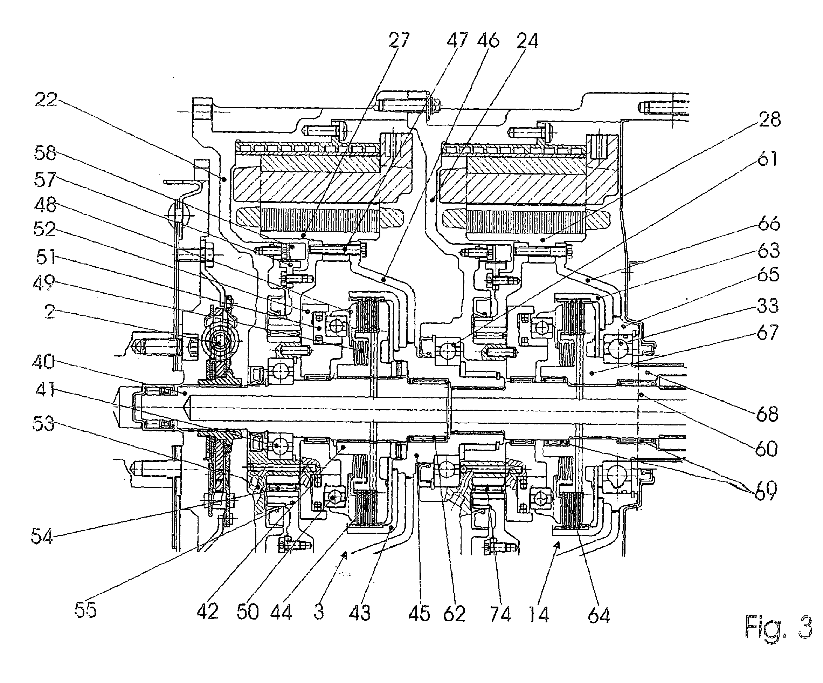

Anhand der Fig. 3 wird nun der Inhalt der beiden Moduln 10,12 näher beschrieben. Die über den Schwingungstilger 2 angetriebene erste Welle 40 ist einerseits mittels eines Lagers 41 in der Wand 22 des Gehäuses gelagert. Sie ist drehfest mit einem Innenteil 42 der ersten Kupplung 3 verbunden. Deren Außenteil 43 ist mit einem Kuppelstück 45 drehfest verbunden, das ein Nadellager 62 enthält, in dem das andere Ende der ersten Welle 40 gelagert ist. Ebenso ist eine Kuppelscheibe 46 mit dem Kuppelstück 45 drehfest verbunden, hier verschweißt. Der Außenteil 43 der Kupplung, das Kuppelstück 45 und Kuppelscheibe 46 bilden somit eine verschweißte Einheit. Die Kuppelscheibe 46 ist mittels Bolzen 47 mit dem ersten Rotor 27 fest verbunden. Wie noch zu zeigen, sind die beiden Rotoren 27,28 baugleich. Sie unterscheiden sich nur in der Form der Kuppelscheiben 46 welche, weil mittels der Bolzen 47 angeschraubt, je nach zukünftiger Verwendung gewählt werden kann.

Die erste Kupplung 3 enthält in bekannter Weise ein Lamellenpaket 44, auf das und auf dessen Tellerfedern 49 eine Druckplatte 48 einwirkt. Diese wird von einem Aktuator, der aus einem gehäusefestem ringförmigen Zylinder 52 und einem Ringkolben 51 besteht, über ein Drucklager 50 beaufschlagt. In der Wand 22 des Gehäuses ist weiter eine Ölzufuhrbohrung 53 zu dem Zylinder 52 und ein Nadellager 54 vorgesehen, in dem eine Rotorscheibe 55 gelagert ist. Die erste Kupplung 3 ist somit innerhalb des ersten Rotors 27 und zwischen der Kuppelscheibe 46 und der Rotorscheibe 55 untergebracht. An der Rotorscheibe 55 ist ein Drehzahlgeberkranz 57 mit geeigneten Zähnen befestigt, welcher mit einem gehäusefesten Drehzahlsensor 58 zusammenwirkt. Das Ausgangssignal des Drehzahlsensors 58 kann von der Steuerung benutzt werden, um das Einrücken der Kupplung in Abhängigkeit von der anliegenden Drehzahldifferenz zu beeinflussen.

Der zweite Modul 12 enthält eine zweite Welle 60, die mit dem Kuppelstück 45 des ersten Moduls drehfest verbunden und in diversen Nadellagern 69 teils im Gehäuse und teils in der zweiten Kupplung 14 gelagert ist. Die dritte Kupplung 14 im zweiten Modul 12 besteht wieder aus einem Außenteil 63 und einem Innenteil 67 mit dazwischen einem Lamellenpaket 64. Der Außenteil 63 ist mit einem Lagerring 65 verschweißt, ebenso wie eine Kuppelscheibe 66. Weil der Lagerring 65 einen größeren Durchmesser als das Kuppelstück 45 des ersten Moduls 10 hat, wird hier eine andere Kuppelscheibe 66 verwendet und ist der Innendurchmesser des Außenteiles 63 der Kupplung 3 größer. Der Rotor 28 der zweiten elektrischen Maschine 13 unterscheidet sich von dem der ersten elektrischen Maschine 11 nur durch die andere aufgeschraubte Kuppelscheibe 66. Der Innenteil 67 der zweiten Kupplung 14 ist auf der zweiten Welle 60 in Nadellagern 69 gelagert und setzt sich in einer Hohlwelle 68 fort, auf der, siehe Fig. 2, das Primärzahnrad 32 des Versatztriebes 15 drehfest sitzt.

Eine näher Beschreibung des zweiten Moduls 12 erübrigt sich, da die beiden Moduln mit einer größtrnöglichen Anzahl von Gleichteilen ausgeführt sind. So ist zum Beispiel das Nadellager 74 des zweiten Rotors 28 identisch mit dem Nadellager 54 des ersten Rotors 27. Die Unterschiede bestehen nur in den verschiedenen Wellen und Wellenanbindungen der Innenteile 42,67 und Außenteile 43,63 der Kupplungen und des Kuppelstückes 45 und des Lagerringes 65. Dank des modularen Aufbaues ist es auch möglich, nur den ersten Modul 10 alleine (für ein Fahrzeug mit nur einer angetriebenen Achse) oder nur den zweiten Modul 12 alleine (für ein Fahrzeug mit konventionellem Antrieb einer Achse und elektrischen Zusatzantrieb der zweiten Achse) zu verwenden. Insgesamt ist die Silhouette der beschriebenen Antriebseinheit nicht größer als die eines konventionellen Verteilergetriebes.

## Patentansprüche

1. Antriebseinheit für ein Kraftfahrzeug mit Hybridantrieb und einem Antriebsstrang in Längsanordnung, welcher Antriebsstrang auch eine Verbrennungskraftmaschine (1), eine Längswelle (9) zum Antrieb einer ersten Achse (7*), und ein Getriebe (6) umfasst, und welche Antriebseinheit zwischen der Verbrennungskraftmaschine und der ersten Achse angeordnet ist und aus einem Gehäuseteil, einer Durchtriebswelle, einer die Durchtriebswelle umgebenden elektrischen Maschine und einer ersten Kupplung vor und und einer zweiten Kupplung (5) nach der elektrischen Maschine besteht, **dadurch gekennzeichnet, dass** eine erste elektrische Maschine (11) mit der ersten Kupplung (3) baulich vereint ist und dass für den Antrieb einer zweiten Achse (17*) die Antriebseinheit eine zweite die Durchtriebswelle (60) umgebende elektrische Maschine (13) umfasst und über eine dritte Kupplung (14) und einen Versatztrieb (15) mit einer zur zweiten Achse (17*) führenden Welle (16) antriebsverbunden ist.

2. Antriebseinheit nach Anspruch 1, **dadurch gekennzeichnet, dass** die zweite elektrische Maschine (13) mit der dritten Kupplung (14) baulich vereint ist.

3. Antriebseinheit nach Anspruch 1 oder 2, **dadurch gekennzeichnet, dass** die Kupplung (3; 14; 3,14) innerhalb der elektrischen Maschine (11; 13; 11,13) angeordnet ist.

4. Antriebseinheit nach Anspruch 1, **dadurch gekennzeichnet, dass** die erste (11) und die zweite (13) elektrische Maschine je von einem aus einem zylindrischen Mantel (21,23) und einer achsnormalen Wand (22,24) bestehenden Gehäuse aufgenommen sind und dass die zylindrischen Mäntel (21,23) miteinander verschraubt sind.

5. Antriebseinheit nach Anspruch 1, wobei die elektrische Maschine (11;13) sich aus einem im Gehäuse befestigten Stator (25;26) und einem Rotor (27;28) zusammensetzt und wobei die Kupplung (3;14) jeweils eine aus einem Innenteil (42;67) und einem Aussenteil (43;63) bestehende Lamellenkupplung ist, **dadurch gekennzeichnet, dass** der Rotor (27;28) in einem Lager (54;74) an der achsnormalen Wand (22;24) des Gehäuses gelagert ist und eine austauschbare Kuppelscheibe (46;66) hat, die mit dem Kupplungsaussenteil (43;63) drehfest verbunden ist, wobei die Kupplung (3;14) räumlich zwischen dem Lager (54;74) und der Kuppelscheibe (46;66) angeordnet ist.

6. Antriebseinheit nach Anspruch 5, **dadurch gekennzeichnet, dass** von der ersten Kupplung (3) der Innenteil (42) auf einer ersten Welle (40) sitzt, die mit der Verbrennungskraftmaschine (1) antriebsverbunden ist und dass der Aussenteil (43) mit einer zweiten Welle (60) drehfest verbunden ist, welche die zweite elektrische Maschine (13) durchsetzt und zur zweiten Kupplung führt.

7. Antriebseinheit nach Anspruch 5, **dadurch gekennzeichnet, dass** von der dritten Kupplung (14) der Innenteil (67) über eine Hohlwelle (68) mit einem Primärrad (32) des Versatztriebes (15) drehfest verbunden ist und der Aussenteil (43) mit der Kuppelscheibe (66) der zweiten elektrischen Maschine (13) drehfest verbunden ist.

8. Antriebseinheit nach Anspruch 4, **dadurch gekennzeichnet, dass** ein einen Ringkolben (51) enthaltender Aktuatorzylinder (52) für die Kupplung (3;14) an der achsnormalen Wand (22;24) befestigt ist, und der Ringkolben (51) über ein Drucklager (50) mit einer Andruckplatte (48) der Kupplung (3;14) zusammenwirkt.

9. Antriebseinheit nach Anspruch 1, **dadurch gekennzeichnet, dass** die elektrische Maschine (11;13) einen an der achsnormalen Wand (22;24) befestigten Drehzahlsensor (58) hat und am Rotor (55) ein Drehzahlgeber-Kranz (57) angebracht ist.

## Claims

1. Drive unit for a motor vehicle with a hybrid drive and a drive train in a longitudinal arrangement, which drive train also comprises an internal combustion engine (1), a longitudinal shaft (9) for driving a first axle (7*), and a gear mechanism (6), and which drive unit is arranged between the internal combustion engine and the first axle and comprises a housing part, a through-drive shaft, an electrical machine surrounding the through-drive shaft and a first clutch upstream of and a second clutch (5) downstream of the electrical machine, **characterized in that** a first electrical machine (11) is structurally combined with the first clutch (3), and **in that**, for driving a second axle (17*), the drive unit comprises a second electrical machine (13), which surrounds the through-drive shaft (60), and is drive-connected to a shaft (16) leading to the second axle (17*) via a third clutch (14) and an offset drive (15).

2. Drive unit according to Claim 1, **characterized in that** the second electrical machine (13) is structurally combined with the third clutch (14).

3. Drive unit according to Claim 1 or 2,
**characterized in that** the clutch (3; 14; 3, 14) is arranged within the electrical machine (11; 13; 11, 13).

4. Drive unit according to Claim 1, **characterized in that** the first electrical machine (11) and the second electrical machine (13) are each accommodated by a housing comprising a cylindrical casing (21, 23) and an axially normal wall (22, 24), and **in that** the cylindrical casings (21, 23) are screwed to one another.

5. Drive unit according to Claim 1, the electrical machine (11; 13) comprising a stator (25; 26) fixed in the housing and a rotor (27; 28), and the clutch (3; 14) in each case being a multi-plate clutch comprising an inner part (42; 67) and an outer part (43; 63), **characterized in that** the rotor (27; 28) is mounted in a bearing (54; 74) on the axially normal wall (22; 24) of the housing and has a replaceable coupling disk (46; 66), which is connected to the clutch outer part (43; 63) such that it is fixed against rotation, the clutch (3; 14) being arranged physically between the bearing (54; 74) and the coupling disk (46; 66).

6. Drive unit according to Claim 5, **characterized in that**, of the first clutch (3), the inner part (42) rests on a first shaft (40), which is drive-connected to the internal combustion engine (1), and **in that** the outer part (43) is connected to a second shaft (60) such that it is fixed against rotation, which second shaft (60) passes through the second electrical machine (13) and leads to the second clutch.

7. Drive unit according to Claim 5, **characterized in that**, of the third clutch (14), the inner part (67) is connected to a primary wheel (32) of the offset drive (15) such that it is fixed against rotation via a hollow shaft (68) and the outer part (43) is connected to the coupling disk (66) of the second electrical machine (13) such that it is fixed against rotation.

8. Drive unit according to Claim 4, **characterized in that** an actuator cylinder (52), which contains an annular piston (51), for the clutch (3; 14) is fixed to the axially normal wall (22; 24), and the annular piston (51) interacts with a contact-pressure plate (48) of the clutch (3; 14) via a thrust bearing (50).

9. Drive unit according to Claim 1, **characterized in that** the electrical machine (11; 13) has a rotation speed sensor (58), which is fixed to the axially normal wall (22; 24), and a rotation speed transmitter collar (57) is fitted to the rotor (55).

## Revendications

1. Unité d'entraînement pour un véhicule automobile à entraînement hybride et transmission en agencement longitudinal, ladite transmission comprenant aussi un moteur à combustion interne (1), un arbre longitudinal (9) pour l'entraînement d'un premier essieu (7*) et une boîte de vitesses (6), et ladite unité d'entraînement étant disposée entre le moteur à combustion interne et le premier essieu et se composant d'une partie de boîtier, d'un arbre d'entraînement direct, d'un moteur électrique entourant l'arbre d'entraînement direct et d'un premier embrayage avant et d'un deuxième embrayage (5) après le moteur électrique, **caractérisée en ce que** le premier moteur électrique (11) est relié physiquement au premier embrayage (3) et **en ce que** pour l'entraînement d'un deuxième essieu (17*), l'unité d'entraînement comprend un deuxième moteur électrique (13) entourant l'arbre d'entraînement direct (60), et est connectée par entraînement par le biais d'un troisième embrayage (14) et d'un entraînement de décalage (15) à un arbre (16) conduisant au deuxième essieu (17*).

2. Unité d'entraînement selon la revendication 1,
**caractérisée en ce que** le deuxième moteur électrique (13) est relié physiquement au troisième embrayage (14).

3. Unité d'entraînement selon la revendication 1 ou 2, **caractérisée en ce que** l'embrayage (3 ; 14 ; 3, 14) est disposé à l'intérieur du moteur électrique (11 ; 13 ; 11, 13).

4. Unité d'entraînement selon la revendication 1,
**caractérisée en ce que** le premier (11) et le deuxième (13) moteur électrique sont reçus à chaque fois par un boîtier constitué d'une enveloppe cylindrique (21, 23) et d'une paroi (22, 24) perpendiculaire à l'essieu, et **en ce que** les enveloppes cylindriques (21, 23) sont vissées ensemble.

5. Unité d'entraînement selon la revendication 1, dans laquelle le moteur électrique (11 ; 13) se compose d'un stator (25 ; 26) fixé dans le boîtier et d'un rotor (27 ; 28) et dans laquelle l'embrayage (3 ; 14) est dans chaque cas un embrayage multidisques constitué d'une partie intérieure (42 ; 67) et d'une partie extérieure (43 ; 63), **caractérisée en ce que** le rotor (27 ; 28) est monté dans un palier (54 ; 74) sur la paroi (22 ; 24) du boîtier perpendiculaire à l'essieu et présente un disque d'accouplement (46 ; 66) remplaçable, qui est connecté de manière solidaire en rotation à la partie extérieure de l'embrayage (43 ; 63), l'embrayage (3 ; 14) étant disposé spatialement entre le palier (54 ; 74) et le disque d'accouplement (46 ; 66).

6. Unité d'entraînement selon la revendication 5, **caractérisée en ce que** la partie intérieure (42) du premier embrayage (3) repose sur un premier arbre (40), qui est connecté par entraînement au moteur à combustion interne (1) et **en ce que** la partie extérieure (43) est connectée de manière solidaire en rotation à un deuxième arbre (60) qui passe à travers le deuxième moteur électrique (13) et qui conduit au deuxième embrayage.

7. Unité d'entraînement selon la revendication 5, **caractérisée en ce que** la partie intérieure (67) du troisième embrayage (14) est connectée de manière solidaire en rotation par le biais d'un arbre creux (68) à une roue primaire (32) de l'entraînement de décalage (15) et la partie extérieure (43) est connectée de manière solidaire en rotation au disque d'accouplement (66) du deuxième moteur électrique (13).

8. Unité d'entraînement selon la revendication 4, **caractérisée en ce qu'**un cylindre d'actionnement (52) contenant un piston annulaire (51) pour l'embrayage (3 ; 14) est fixé sur la paroi (22 ; 24) perpendiculaire à l'essieu, et le piston annulaire (51) coopère par le biais d'un palier de pression (50) avec une plaque de pression (48) de l'embrayage (3 ; 14).

9. Unité d'entraînement selon la revendication 1,
**caractérisée en ce que** le moteur électrique (11 ; 13) présente un capteur de vitesse de rotation (58) fixé à la paroi (22 ; 24) perpendiculaire à l'essieu et une couronne de tachymètre (57) est montée sur le rotor (55).
